# EUROPEAN PATENT APPLICATION

(11) **EP 4 799 532 A1**
(43) Date of publication of application: **02.09.2026**
(21) Application number: 26161210.5
(22) Date of filing: 27.02.2026
(51) Int. Cl.: A47B 13/00, F16B 12/42

(54) **ATTACHEMENT ASSEMBLY FOR A TABLE TOP AND CORRESPONDING METHOD**

(30) Priority: 28.02.2025 IT 202500004122
(71) Applicant: Calligaris S.P.A., 20161 Milano (MI) (IT)
(72) Inventor: De Bonis Sciaraffia, Michele Rocco, 31100 Treviso (TV) (IT)
(74) Representative: Petraz, Gilberto Luigi

(57) **Abstract**

An attachment assembly 100 for attaching a table top 200 to a support frame 300 comprises an upper flange 20 and a lower flange 40.

The upper flange 20 is attached to a lower surface of the table top 200B by means of at least one adhesive mean 10, while the lower flange 40 is attached to a lower surface of the support frame 300A.

The upper flange 20 and lower flange 40 are configured to be reciprocally coupled in a releasable manner along a coupling axis Y.

## Description

### FIELD OF THE INVENTION

The present invention concerns an attachment assembly for attaching a table top to a corresponding support frame, and a corresponding method for attaching the table top to the support frame.

### BACKGROUND OF THE INVENTION

Different attachment assemblies are known for attaching a table top to a respective support frame, generally by combining mechanical attachment and/or gluing, in the latter case using different types of resins that vary according to the materials used. Gluing is chosen, for example, in the event that the table top is made of a material that is not prone to mechanical machining, such as drilling, milling, boring or suchlike, for example glass, glass ceramic, ceramic, marble, stone or stone material in general, or suchlike. Of course, the use of glue means that the connection between flange and table top is essentially non-releasable, save for an unwanted detachment or breakage and, in the latter cases, the very nature of gluing makes repairs and/or replacements difficult.

It is also known that resins, according to their composition and use, require specific storage and application conditions that can vary from material to material, for example a certain temperature of the materials to be attached, application temperature, humidity, installation time and stabilization of the glue.

Some known attachment assemblies generally comprise a flange glued to the lower surface of the table top and attached, directly or indirectly, to the underlying support frame. In some situations, in which it is necessary to adjust the distance between the table top and the support frame, a threaded stem can also be provided, which connects the aforementioned flange to a spacer, in turn attached, by means of a clamping element, to the underlying support frame; by screwing or unscrewing the threaded stem, it is possible to adjust the distance of the table top from the support frame.

Known solutions therefore present critical issues correlated to the very structure of the attachment assembly, in particular: a risk of unwanted detachment of the glued flanges, usually when the table is moved by lifting the table top directly, with consequent risk of accidents or breakage of the table top; pre-tensioning of the flanges themselves due to tolerances of the structures and components involved; difficult repairability to restore the gluing; the fact that moving the table with the table top mounted is difficult, due to the overall weight of the table, and risky due to the possible detachment of the flanges as above.

The attachment process also has some disadvantages, including the poor repeatability of the process, generally due to the fact that different subjects who glue the flanges can use different gluing materials and methods of application and gluing which are specific for each subject. This aspect is correlated to the fact that gluing technologies and materials are very often different for the various suppliers. The gluing process is therefore often random, since it depends on the specific knowledge of one or the other supplier. In addition, the process itself is influenced by numerous variables, such as the temperature at which the materials are stored, the application temperature, the humidity, the operator's capabilities, the gelation and curing time, or other. The laboriousness and poor repeatability of the gluing process naturally also has an impact on economic and time costs. The repair process is also long, expensive and laborious.

The above is also reflected in disadvantages correlated to managing the components warehouse, in particular because of the different specialization of the shape and arrangement of the flanges, and managing the different storage conditions for the gluing materials, which are often different for the various suppliers and are difficult to control.

There is therefore the need to perfect an attachment assembly for a table top and corresponding method that can overcome at least one of the disadvantages of the state of the art.

In particular, one purpose of the present invention is to provide an attachment assembly for attaching a table top to the underlying support frame in a simple, fast, reliable, and easily removable and restorable manner.

Another purpose is to provide an attachment assembly that is applicable to a wide range of table top and support frame materials in a versatile manner.

Another purpose is to provide an attachment assembly that is economical and simple to apply.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the present invention or variants to the main inventive idea.

In accordance with the above purposes, an attachment assembly for attaching a table top to a support frame is modular and comprises an upper flange and a lower flange which are configured to be reciprocally coupled in a releasable manner.

The upper flange is able to be attached to a lower surface of the table top by means of at least one adhesive mean present on an upper face of the upper flange, and the lower flange is able to be attached to the support frame.

As indicated above, the upper flange and lower flange are configured to be reciprocally coupled in a releasable manner, in particular along a coupling axis thus selectively assuming, by means of a reciprocal rotation around the coupling axis, a release position and a fastening position of the upper flange and lower flange, thus determining, in the fastening position, a stable attachment of the table top to the respective support frame.

This achieves the advantage of being able to separate the table top from the corresponding support frame.

Furthermore, the operations of attaching the attachment assembly to the lower surface of the table top are simplified by using the aforementioned adhesive mean.

In accordance with another aspect of the present invention, the upper flange and lower flange comprise respective releasable fastening means and counter-means configured to selectively determine the fastening position.

In accordance with another aspect of the present invention, the fastening means and counter-means are configured to couple by means of a reciprocal rotation around the coupling axis.

In accordance with another aspect of the present invention, the fastening means comprise a plurality of first fastening teeth protruding from a lower face of the upper flange, and the fastening counter-means comprise: a plurality of apertures configured to each axially receive a respective first fastening tooth in the release position; respective sliding seatings configured to accommodate the first fastening teeth allowing them to rotate until a first end-of-travel, so as to pass from the release position to the fastening position; and a plurality of second fastening teeth which, when the first fastening teeth abut against the first end-of-travel, interfere axially with the respective first fastening teeth, determining the fastening position.

In accordance with another aspect of the present invention, the releasable fastening means and counter-means comprise respective and mating self-centering portions to facilitate the reciprocal axial coupling.

Advantageously, the first and second fastening teeth have at least a first and a second protuberance, with an inclined converging planes outline, defining the aforementioned self-centering portions.

In accordance with another aspect of the present invention, the upper flange comprises, in an essentially central position with respect to the coupling axis, a swivel joint provided with a spherical head coupled in a spherical seating of the upper flange. The swivel joint is provided with a threaded portion able to cooperate axially with a threaded attachment element associable with the support frame. The attachment element is configured to subject the threaded portion to tensile stress and determine the tightening of the upper and lower flange between the table top and the support frame.

In accordance with another aspect of the present invention, the threaded portion of the swivel joint comprises a first threaded stem, which cooperates axially with the attachment element that comprises a second threaded cavity.

In accordance with another aspect of the present invention, the threaded portion of the swivel joint comprises a first threaded cavity, which cooperates axially with the attachment element that comprises a second threaded stem.

In accordance with another aspect of the present invention, the upper flange comprises a plurality of protrusions that, by means of the reciprocal rotation of the flanges around the coupling axis, interlock in a plurality of fastening seatings and release seatings, which are positioned at different distances along an internal wall of the lower flange, securing the fastening position and release position, respectively.

In accordance with another aspect of the present invention, the lower flange has an external wall along which there are a plurality of gripping elements.

In accordance with another aspect of the present invention, the upper face of the upper flange and the lower face of the lower flange have a plurality of slits.

In accordance with a further aspect of the present invention, there is provided a method for attaching a table top to a support frame, which comprises the steps of attaching at least one upper flange to a lower surface of the table top by means of at least one adhesive mean present on an upper face of the upper flange; attaching at least one respective lower flange to the support frame; reciprocally coupling the upper flange and lower flange in a releasable manner along a coupling axis which thus assume, by means of a reciprocal rotation around the coupling axis, a fastening position which determines a stable attachment of the table top to the support frame.

### DESCRIPTION OF THE DRAWINGS

These and other aspects, characteristics and advantages of the present invention will become apparent from the following description of some embodiments, given as a non-restrictive example with reference to the attached drawings wherein:
- fig. 1 is a first exploded view of an attachment assembly according to some embodiments;
- fig. 2 is a first lateral view of the attachment assembly assembled according to some embodiments;
- fig. 3A is a perspective view of an upper flange of the attachment assembly, according to some embodiments;
- fig. 3B is a perspective view of a lower flange of the attachment assembly, according to some embodiments;
- fig. 4A is a first lateral section view of the attachment assembly in a fastening position, according to some embodiments;
- fig. 4B is a first bottom view of an upper flange and a lower flange in the fastening position, according to some embodiments;
- fig. 5A is a second lateral section view of the attachment assembly in a release position, according to some embodiments;
- fig. 5B is a second bottom view of the upper flange and the lower flange in the release position, according to some embodiments;
- fig. 6 is a second exploded view of the attachment assembly, according to some embodiments;
- fig. 7 is a second lateral view of the attachment assembly, according to some embodiments;

We must clarify that the phraseology and terminology used in the present description, as well as the figures in the attached drawings also in relation as to how described, have the sole function of better illustrating and explaining the present invention, their purpose being to provide a non-limiting example of the invention itself, since the scope of protection is defined by the claims.

To facilitate comprehension, the same reference numbers have been used, where possible, to identify identical common elements in the drawings. It is understood that elements and characteristics of one embodiment can be conveniently combined or incorporated into other embodiments without further clarifications.

### DESCRIPTION OF SOME EMBODIMENTS

The attached drawings are used to describe some embodiments of an attachment assembly 100 used to attach a table top 200 to a support frame 300. The attachment assembly 100 is modular and comprises an upper flange 20 and a lower flange 40 configured to be reciprocally coupled in a releasable manner.

The table top 200 can have, for example, a circular, elliptical, quadrangular or polygonal shape in general, or have different shapes, and it can be made, for example, of glass, glass ceramic, ceramic, marble, stone or stone material in general, but possibly also wood-based materials, or metal materials, such as steel, iron, aluminum and/or suchlike.

The support frame 300 can generally be made of metal or other suitable materials.

The upper flange 20 and the lower flange 40 can have different geometric shapes, according to aesthetic and/or functional requirements, for example with a round, elliptical or polygonal shape, or suchlike.

Furthermore, the upper flange 20 and the lower flange 40 can be made of ferrous, composite or plastic materials, for example steel, stainless steel, iron, PVC, PET, and/or suchlike.

The upper flange 20 can be attached to a lower surface 200B of the table top 200 by means of at least one adhesive mean 10 present on an upper face 20A of the upper flange 20.

In some embodiments, the adhesive mean 10 can be, for example, one or more double-sided adhesive elements or silicone, an epoxy bi-component adhesive, or suchlike.

A double-sided adhesive element is understood as tape, a label, sheet or similar thin product, of suitable size and shape, provided with two surfaces, both treated with special substances that make them adhesive.

Advantageously, the use of the adhesive mean 10 allows to simplify the attachment of the upper flange 20 to the table top 200B, because it does not require specific environmental conditions for application and storage, like the resins used in the state of the art.

The lower flange 40 can be attached to an upper surface 300A of the underlying support frame 300, generally by means of mechanical attachment means, as will be explained in detail below.

As indicated above, the upper flange 20 and the lower flange 40 can be configured to be reciprocally coupled in a releasable manner along a coupling axis Y.

By means of a reciprocal rotation, the upper flange 20 and the lower flange 40 can selectively assume a release position and a fastening position of the upper flange 20 and lower flange 40, determining, in the fastening position, a stable attachment of the table top 200 to the support frame 300.

Advantageously, the releasable coupling between the upper flange 20 and the lower flange 40 makes the table top 200 easily separable from the corresponding support frame 300.

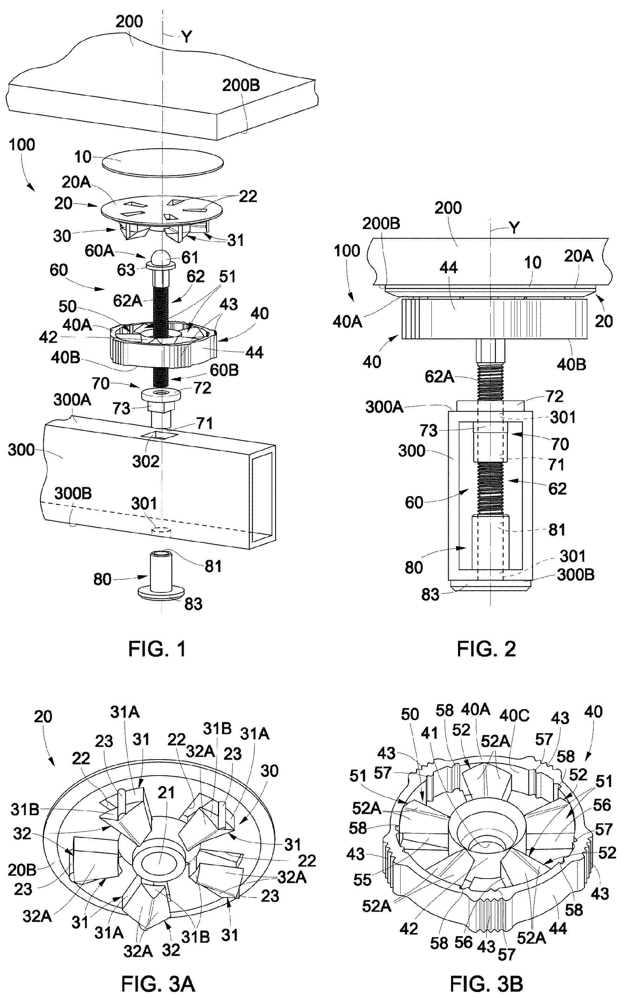

With reference to fig. 3A, the upper face 20A of the upper flange 20 can have a larger area than the area of the lower face 40B of the lower flange 40, so as to have a larger application surface for the adhesive mean 10, improving gluing.

The upper face 20A of the upper flange 20 can have a thin thickness, reducing the overall dimensions of the attachment assembly 100 without penalizing the gluing performance.

With reference to embodiments described using figs. 1, 3A, 3B, the upper flange 20 and the lower flange 40 can comprise respective releasable fastening means 30 and counter-means 50, configured to selectively determine, when coupled, the fastening position and instead, when decoupled, the release position as above.

In particular, the fastening means 30 and counter-means 50 are configured to couple by means of a reciprocal rotation around the coupling axis Y.

With reference to embodiments described using figs. 1, 3A and 6, the fastening means 30 can comprise a plurality of first fastening teeth 31 protruding from a lower face 20B of the upper flange 20.

With reference to embodiments described using figs. 3B, 4A and 5A, the fastening counter-means 50 can comprise a plurality of apertures 53, a plurality of respective sliding seatings 54 and a plurality of second fastening teeth 51. Favorably, the number of apertures 53, sliding seatings 54 and second fastening teeth 51 is coordinated to the number of first fastening teeth 31.

The aforementioned apertures 53 can be configured to each axially receive a respective first fastening tooth 31 in the release position.

The apertures 53 are perimetrically limited by the second fastening teeth 51, which are suitably disposed according to an angular distribution with a desired pitch around the coupling axis Y. The angular distribution of the second fastening teeth 51 is coordinated to that of the first fastening teeth 31.

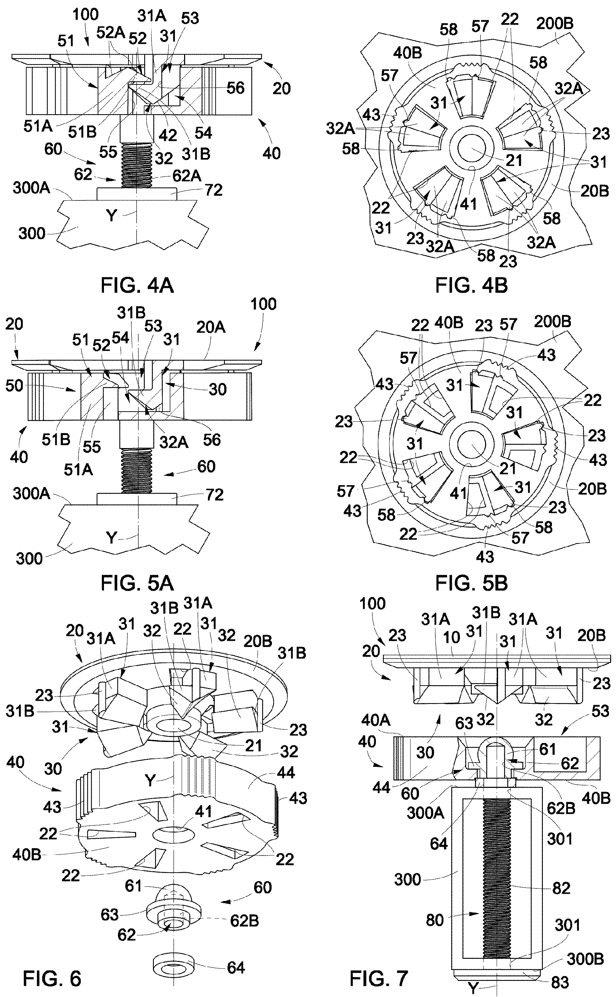

With reference to embodiments described using figs. 5A and 5B, the sliding seatings 54 can be configured to accommodate the first fastening teeth 31 allowing them to rotate until a first end-of-travel 55, so as to pass from the release position to the fastening position.

With reference to embodiments described using figs. 4A and 4B, the sliding seatings 54 can also allow a rotation, in the opposite direction to that described using figs. 5A and 5B, of the first fastening teeth 31 until a second end-of-travel 56, so as to pass from the fastening position to the release position, which allows to axially decouple the upper flange 20 from the lower flange 40.

In some embodiments, each of the first fastening teeth 31 comprises a first body 31A projecting at the lower part from the respective upper flange 20, and a first tooth-shaped fastening portion 31B projecting transversely from the first body 31A.

In some embodiments, each of the second fastening teeth 51 comprises a second body 51A projecting radially from a central core 42 from the respective lower flange 40, and a second tooth-shaped fastening portion 51B projecting transversely from the second body 31B. In these embodiments, each lower flange 40 therefore comprises the aforementioned core 42 and a perimeter ring 44, and the first fastening teeth 31 are disposed radially connecting the central core 42 to the perimeter ring 44. Furthermore, the core 42 can have a central hole 41, as better explained below.

In this way, when the first fastening teeth 31 abut against the first end-of-travel 55, the second fastening teeth 51 interfere axially with the respective first fastening teeth 31, determining the fastening position. In particular, this axial interference can be achieved through the axial interaction between the first tooth-shaped fastening portions 31B and the second tooth-shaped fastening portions 51B.

According to possible embodiments, the releasable fastening means 30 and counter-means 50 can comprise respective and mating self-centering portions to facilitate the reciprocal axial coupling.

In some embodiments, each of the first fastening teeth 31 can, in particular, have first shaped portions 32 and each of the second fastening teeth 51 can have respective second shaped portions 52, mating in shape with the first shaped portions 32 and configured to achieve a self-centering effect that favors the axial coupling between the upper flange 20 and the lower flange 40. In possible implementations, the first shaped portions 32 and second shaped portions 52 can comprise, respectively, a pair of converging inclined surfaces, or planes, 32A, 52A. For example, the converging inclined surfaces, or planes, 32A, 52A can define a cusp or wedge shape.

With reference to embodiments described using figs. 1 and 6, a swivel joint 60 can be provided connected to the upper flange 20 in an essentially central position with respect to the coupling axis Y. The swivel joint 60 can be configured to pass through the central hole 41.

Advantageously, to compensate for the pre-tensioning caused by the structural tolerances of the table top 200 and the support frame 300, the swivel joint 60 can be provided, in correspondence with a first end 60A, with a spherical head 61.

The spherical head 61 can be coupled snap-in into a mating spherical seating 21 present centrally in the lower face 20B of the upper flange 20 (figs. 1, 3A, 6 and 7).

The spherical head 61 allows the swivel joint 60 to tilt in any desired orientation whatsoever, keeping the spherical seating 21 as the fulcrum.

With reference to figs. 1, 2, 6 and 7, according to possible embodiments the swivel joint 60 can be provided with a threaded portion 62 able to cooperate axially with a threaded attachment element 80 associable with the support frame 300.

Advantageously, the attachment element 80 is configured to subject the threaded portion 62 to tensile stress and determine the attachment of the attachment assembly 100 to the support frame 300. For example, the attachment element 80 in particular comprises a first head 83 that abuts against a lower surface of the support frame 300B, for traction purposes.

According to some possible embodiments described using figs. 1 and 2, the threaded portion 62 can comprise a first threaded stem 62A. The latter is able to pass through one or more through holes 301, along the coupling axis Y, which are present on the upper surface of the support frame 300A, and it can cooperate axially with the attachment element 80, in particular with a second threaded cavity 81 thereof. In these embodiments, the first stem 62A can have, in correspondence with a second end 60B of the swivel joint 60, a screwing seating. In particular, the screwing seating can have, for example, a hexagonal shape, or the shape of a six-pointed star recess (e.g. torx) or suchlike, in order to operate with a screwing tool on the first stem 62A, adjusting the distance between the table top 200 and the support frame 300.

The embodiments described using figs. 1 and 2 can therefore be favorably used when it is necessary to adjust the distance between the table top 200 and the underlying support frame 300, in particular by exploiting the presence of the first threaded stem 62A.

According to possible embodiments described using figs. 1 and 2, the attachment assembly 100 can comprise a threaded bushing 70, which comprises a third threaded cavity 71 in which the first stem 62A can be screwed, a second head 72 and a polygonal-shaped portion 73 below the second head 72.

In particular, the polygonal-shaped portion 73 has a shape such that it can be housed in a polygonal seating 302 in correspondence with the hole 301 that is provided on the upper surface of the support frame 300A, according to an interlocking coupling or an anti-rotation coupling in general, facilitating the screwing and unscrewing of the first stem 62A.

According to other possible embodiments described using figs. 6 and 7, the threaded portion 62 can instead comprise a first threaded cavity 62B, which can cooperate axially with the attachment element 80, in particular with a second threaded stem 82 thereof, passing through one or more holes 301 as described above with reference to figs. 1 and 2.

The embodiments described using figs. 6 and 7 can be used, for example, when it is not necessary to adjust the distance between the table top 200 and the support frame 300.

According to possible embodiments described using figs. 6 and 7, the assembly 100 can comprise a toothed washer 64 coupled between the swivel joint 60 and the upper surface of the support frame 300A, with the aim of facilitating the screwing and unscrewing of the second stem 82.

Advantageously, in all the embodiments described here, the swivel joint 60 can comprise a stop 63, for example with a circular or polygonal shape, provided at the base of the spherical head 61, which is able to clamp the lower flange 40 inserted in the swivel joint 60 thanks to the specific conformation of the aforementioned stop 63, which acts as a support element.

With reference, for example, to the embodiments described using figs. 3B, 4B and 5B, the first fastening teeth 31 can comprise a plurality of protrusions 23 while the lower flange 40 can comprise a plurality of first snap-in coupling seatings 57 and possibly also a plurality of second snap-in coupling seatings 58.

The function of the first snap-in coupling seatings 57 is to selectively engage the respective protrusions 23 in the fastening position, and offer a desired resistance with respect to an undesired counter-rotation of the upper flange 20 with respect to the lower flange 40. This resistance can be overcome by a user or operator by applying sufficient torque, by voluntarily making the upper flange 20 rotate with respect to the lower flange 40 from the fastening to the release position. In this possible implementation, a safety function is therefore implemented that guarantees the user or operator the correct angular coupling between the upper flange 20 and the lower flange 40, and prevents an accidental or unwanted decoupling.

Favorably, the coupling between the first snap-in coupling seatings 57 and the respective protrusions 23 is also identified by a perceptible "click" caused by the snap-in coupling.

The function of the possible second snap-in coupling seatings 58 is similar, only in the direction of the rotation that leads to the release position, so that the user or operator perceives that the upper flange 20 and the lower flange 40 are angularly decoupled.

In particular, the protrusions 23 have a shape such that they can be housed in the plurality of first 57 or second 58 snap-in coupling seatings according to a same-shape coupling, by means of a reciprocal rotation of the flanges 20, 40 around the coupling axis Y.

Advantageously, the plurality of first 57 and second 58 snap-in coupling seatings can be disposed angularly at a desired distance from each other along an internal wall 40C of the perimeter ring 44 of the lower flange 40 (fig. 3B), helping to stably define the release position and the fastening position, respectively.

With reference to embodiments described using fig. 3B, the lower flange 40 can have, externally, a plurality of gripping elements 43. In particular, the gripping elements 43 can be protruding or recessed, making it easier for the user to grip the lower flange 40. For example, the gripping elements 43 can be present on the perimeter ring 44 described above.

With reference to the embodiments described using figs. 1, 3A, 4B and 5B, the upper face 20A of the upper flange 20 and the lower face 40B of the lower flange 40 can have a plurality of apertures 22, which are advantageously useful for the purposes of production by molding, reduce production costs, saving material and reducing weight.

Referring to the embodiments described using figs. from 4A to 6, a method for attaching a table top 200 to a support frame 300 using an attachment assembly 100 as described here comprises the following steps.

Preliminarily, the desired positioning pattern of the one or more attachment assemblies 100 to be used is defined, with respect to the table top 200 and the support frame 300.

An upper flange 20 is then attached to a lower surface of the table top 200B by means of the respective adhesive mean 10.

Subsequently, a respective lower flange 40 is attached to the upper surface of the support frame 300A, using, depending on the embodiments, a swivel joint 60, a threaded bushing 70 or a toothed washer 64, and an attachment element 80.

The spherical head 61 of the swivel joint 60 is then coupled snap-in to the spherical seating 21 of the upper flange 20.

The upper flange 20 and the lower flange 40 are then axially coupled by means of a reciprocal rotation around the coupling axis Y, engaging the respective releasable fastening means 30 and counter-means 50. The presence of the protrusions 23 that engage snap-in the respective first snap-in coupling seatings 57 stabilizes the desired fastening position and acts as a safety against an undesired decoupling (figs. 4A and 4B).

Subsequently, in the event that it is necessary to decouple the table top 200 and the support frame 300, for example in order to move the table, for repair, replacement or otherwise, the upper flange 20 is separated from the lower flange 40 by means of a reciprocal rotation around the coupling axis Y. To do this, as mentioned, the coupling strength of the protrusions 23 in the respective first snap-in coupling seatings 57 is overcome. The rotation to angularly decouple the upper flange 20 from the lower flange 40 ends favorably when the same protrusions 23 engage the second snap-in coupling seatings 58, in the release position (figs. 5A and 5B).

Finally, the table top 200 is lifted, which separates easily and with little effort from the support frame 300 when the spherical head 61 disengages from the spherical seating 21.

Advantageously, since the attachment assembly 100 and the method described are simpler, cheaper and quicker to use compared to the state of the art, it is possible to create kits for the replacement or repair of the attachment assemblies 100 usable directly by an end user or by an operator.

The embodiments described here are advantageous because they allow to constrain and release the table top 200 to/from the support frame 300 in an easy, quick and repeatable manner, preserving the integrity of the components. This solves the problem of detaching the flanges, since the table can be moved by releasing the table top from the support frame, as well as the problem of repairability. The problem of pre-tensioning the flanges is also solved, since the presence of the swivel joint 60 allows for the necessary adaptability.

Moreover, the assembly procedure is easily repeatable and is not affected by different gluing technologies and materials, nor by the variables that generally affect the gluing itself.

Finally, it is no longer necessary to stock flanges with a specialized shape and arrangement, or to provide different and dedicated storage conditions for the gluing material.

It is clear that modifications and/or additions of parts may be made to the attachment assembly 100 and to the corresponding method as described heretofore, without thereby departing from the field and scope of the present invention, as defined by the claims.

In the following claims, the sole purpose of the references in brackets is to facilitate their reading and they must not be considered as restrictive factors with regard to the field of protection defined by the claims.

## Claims

1. Attachment assembly (100) for attaching a table top (200) to a support frame (300), **characterized in that** said attachment assembly (100) is modular and comprises:
an upper flange (20) able to be attached to a lower surface (200B) of the table top (200) by means of at least one adhesive mean (10) present on an upper face (20A) thereof,
a lower flange (40) able to be attached to the support frame (300),
said upper flange (20) and lower flange (40) being configured to be reciprocally coupled in a releasable manner along a coupling axis (Y) thus selectively assuming, by means of a reciprocal rotation around said coupling axis (Y), a release position and a stable fastening position.

2. Attachment assembly (100) as in claim 1, **characterized in that** said upper flange (20) and lower flange (40) comprise respective releasable fastening means (30) and counter-means (50) configured to selectively determine said fastening position.

3. Attachment assembly (100) as in claim 2, **characterized in that** said fastening means (30) and counter-means (50) are configured to couple by means of a reciprocal rotation around said coupling axis (Y).

4. Attachment assembly (100) as in claim 3, **characterized in that** said fastening means (30) comprise a plurality of first fastening teeth (31) protruding from a lower face (20B) of the upper flange (20), and said fastening counter-means (50) comprise: a plurality of apertures (53) configured to each axially receive a respective first fastening tooth (31) in said release position, respective sliding seatings (54) configured to accommodate said first fastening teeth (31) allowing them to rotate until a first end-of-travel (55), so as to pass from said release position to said fastening position, and a plurality of second fastening teeth (51) which, when said first fastening teeth (31) abut against said first end-of-travel (55), interfere axially with respective said first fastening teeth (31), determining said fastening position.

5. Attachment assembly (100) as in any previous claim from 2 to 4, **characterized in that** said releasable fastening means (30) and counter-means (50) comprise respective and mating self-centering portions to facilitate the reciprocal axial coupling.

6. Attachment assembly (100) as in any claim hereinbefore, **characterized in that** it comprises a swivel joint (60) connected to said upper flange (20) in an essentially central position with respect to said coupling axis (Y), said swivel joint (60) being provided with a spherical head (61) coupled in a spherical seating (21) of the upper flange (20) and provided with a threaded portion (62) able to cooperate axially with a threaded attachment element (80) associable with said support frame (300) and configured to subject said threaded portion (62) to tensile stress and determine the tightening of said upper (20) and lower (40) flange between said table top (200) and said support frame (300).

7. Attachment assembly (100) as in claim 6, **characterized in that** said threaded portion (62) of said swivel joint (60) comprises a first threaded stem (62A) able to cooperate axially with said threaded attachment element (80) comprising a second threaded cavity (81).

8. Attachment assembly (100) as in claim 6, **characterized in that** said threaded portion (62) of said swivel joint (60) comprises a first threaded cavity (62B) able to cooperate axially with said threaded attachment element (80) comprising a second threaded stem (82).

9. Attachment assembly (100) as in any claim hereinbefore, **characterized in that** said upper flange (20) comprises a plurality of protrusions (23) that, by means of the reciprocal rotation of said flanges around said coupling axis (Y), interlock in a plurality of fastening seatings (57) and release seatings (58), present at different distances along an internal wall (40C) of said lower flange (40), securing said fastening position and release position, respectively.

10. Method for attaching a table top (200) to a support frame (300), **characterized by** attaching at least one upper flange (20) to a lower surface (200B) of the table top (200) by means of at least one adhesive mean (10) present on an upper face (20B) thereof, attaching at least one respective lower flange (40) to the support frame (300), reciprocally coupling said upper flange (20) and lower flange (40) in a releasable manner along a coupling axis (Y) which thus assume, by means of a reciprocal rotation around said coupling axis (Y), a fastening position which determines a stable attachment of said table top (200) to said support frame (300).
